# EUROPEAN PATENT SPECIFICATION

(11) **EP 3 803 171 B1**
(45) Date of publication and mention of the grant of the patent: **05.06.2024**
(21) Application number: 19726013.6
(22) Date of filing: 28.05.2019
(51) Int. Cl.: F16K 37/00, G05D 7/06

(54) **ACTUATOR, IN PARTICULAR VALVE ACTUATOR AND METHOD FOR OPERATING A VALVE ACTUATOR**
AKTUATOR, INSBESONDERE VENTILAKTUATOR UND VERFAHREN ZUM BETRIEB EINES VENTILAKTUATORS
ACTIONNEUR, EN PARTICULIER ACTIONNEUR DE SOUPAPE ET PROCÉDÉ DE FONCTIONNEMENT D'UN ACTIONNEUR DE SOUPAPE

(30) Priority: 28.05.2018 EP 18174482
(43) Date of publication of application: 14.04.2021
(73) Proprietor: Beckhoff Automation GmbH, 33415 Verl (DE); Danfoss A/S, 6430 Nordborg (DK)
(72) Inventor: BODEN, Sean, 21407 Deutsch Evern (DE); SCHEMMANN, Georg, 33415 Verl (DE)
(74) Representative: Patentanwaltskanzlei WILHELM & BECK
(86) International application number: PCT/EP2019/063742
(87) International publication number: WO 2019/229029

(56) References cited:
- FR-A1- 2 609 519
- FR-A1- 2 779 227
- US-A- 4 926 903
- US-A1- 2005 115 612

## Description

The present invention relates to a valve arrangement comprising a valve actuator and a two-way valve and to a method for operating such a valve arrangement.

The valve actuator is used in connection with the two-way valve. A two-way valve can be used to control a flow rate of a fluid, for example, in a heating system.

The two-way valve comprises an inlet and an outlet and a valve seat between the inlet and the outlet. A valve element is moved by the actuator relatively to the valve seat. When the valve element contacts the valve seat, the flow through the valve is interrupted. When the valve element has the largest distance from the valve seat, the flow rate through the valve is at a maximum.

The flow rate through the valve not only depends on the distance of the valve element from the valve seat, but it depends as well on the pressure difference between the inlet and the outlet. If this pressure difference changes, the flow rate changes as well unless the position of the valve element in relation to the valve seat is adjusted.

To compensate for changes of the pressure difference between the inlet and the outlet valves are known having two sections. One section is used for keeping constant a pressure difference over the other section. The other section is used for flow rate control. When such a valve is used, the actuator has only to adjust the position of the valve element. This adjustment is done by moving the actuation element of the actuator to a specific position corresponding to the desired position of the valve element.

However, a valve having two sections is complicated and expensive.

The actuator can also be used in fan coils units, air handling units or heating and cooling ceilings.

FR 2 609 519 A1 discloses a two-way valve measuring a pressure difference between the valve inlet and the valve outlet by applying two pressure gauges.

FR 2 779 227 A1 discloses an electrically driven valve in which the fluid flow rate is determined based on the motor force required as well as on the position of the shutter of the valve.

US4926903A discloses a butterfly valve using a torque detection device to determine the flow rate through the valve.

US2005/115612 discloses a valve having a valve disk wherein stress detection means for detecting the flow-channel-direction force component of a load applied to the valve disk by the fluid is used to determine the flow rate.

The object of the invention is to provide an valve arrangement allowing a simple control.

This object is solved with a valve arrangement according to claim 1 and the method for operating the valve arrangement according to claim 4. Preferred embodiments are disclosed in the subclaims.

An actuator comprising a drive acting on an actuation element able of moving between first and second positions, a force sensor sensing a force acting on the actuation element, and a stroke sensor sensing a displacement of the actuation element from said first position. The first and second positions e.g. could correspond respectively fully closed and fully open positions of a valve.

When used together with a valve, such an actuator allows control of a flow rate through the valve to which the actuator is connected in a rather simple manner. The actuation element acts on the valve element of the valve. It can, for example, move the valve element to a closed position in which the valve element contacts the valve seat and opens it again. The displacement of the actuation element means the distance between the valve element and the valve seat. In other words, the displacement of the actuation element corresponds to the "opening degree" of the valve. Additionally, the force sensor detects the force acting on the valve element and correspondingly on the actuation element of the actuator. This force contains an information about the pressure difference over the valve, i.e. the pressure difference between the inlet and the outlet of the valve. For a given displacement of the actuation element, the flow rate through the valve depends on the pressure difference over the valve and consequently on the force acting on the actuation element via the valve element.

The drive is connected to control means, wherein the control means adjust the displacement of the actuation element in dependency of the force acting on the actuation element. When, for a given flow rate, the force increases, the control means can move the actuation element to increase the throttling resistance. In this case, the actuation element acts on the valve element in a direction towards the valve seat. If on the other hand the force acting on the actuation element decreases this is a clear indication that the pressure difference over the valve decreases and the actuation element is moved to increase the displacement so that the valve element is moved farther away from the valve seat. The control means can be internal to the drive or can be external.

According to the invention the control means comprise a look-up table in which relations between forces acting on the actuation element and displacements of the actuation element are stored. In many cases a relation between the forces acting on the actuation element and the displacement of the actuation element do not exactly follow a linear function. However, a look-up table or a corresponding matrix can be used to store the necessary relations. This look-up table can be filled beforehand depending on a specific valve or depending on a specific type of valve. The look-up table can be part of the actuator or it can be external to the actuator.

According to the invention the control means comprise calculation means calculating a displacement of the actuation element in reaction of a force acting on the actuation element. Such calculation means can be used when the relation between the forces and the displacements can be described by a function or by a set of functions. It can be used additionally to the look-up table. In particular, the calculation means is used in addition to the look-up table when an interpolation between values sotred in the look-up table is necessary.

In an embodiment of the invention the control means comprise a flow rate input. The flow rate input can receive a set point value for the flow rate through the valve. As mentioned above, this flow rate depends on the displacement of the actuation element and on the pressure difference over the valve. An information about the pressure difference is obtained by the force sensor and the information about the displacement is obtained by the displacement sensor. When the further characteristics of the valve determining the flow rate are known, the required displacement of the actuation element can be adjusted depending on the force acting on the actuation element. When the force acting on the actuation element changes, the displacement has to be changed as well in order to keep constant the flow rate through the valve on the given set point value.

In an embodiment, the actuator is an electric linear actuator.

The force sensor is sensing a tension and/or pressure force.

The method comprising the steps of sensing a force acting on an actuation element of the actuator, sensing a displacement of the actuation element, and adjusting the displacement of the actuation element in reaction to the force.

As mentioned above, the actuator is connected to a two-way valve in which a valve seat is arranged between an inlet and an outlet and a valve element cooperates with the valve seat. The valve element is actuated by the actuation element.

The displacement of the actuation element is the distance between the valve element and the valve seat. The force acting on the actuation element contains an information about the pressure difference between the inlet and the outlet. The valve actuator can adjust the displacement of the actuation element in reaction to the force so that a change in the pressure difference over the valve can be compensated in order to obtain, for example, a constant flow rate.

The displacement is adjusted on basis of a given flow rate.

According to the invention a relation between the flow rate, the force and the displacement is stored in a matrix and read out to adjust the displacement.

In an embodiment of the invention a relation between the flow rate, the force and the displacement is calculated. The calculation can be made additionally to the reading out of the matrix. The matrix is in form of a look-up table, for example.

An embodiment of the invention will now be described in more detail with reference to the drawing, in which:
- Fig. 1: is a schematic illustration of a valve actuator connected to a valve,
- Fig. 2: is a schematic illustration showing a flow of information in a preparation section of the operation,
- Fig. 3: is a flow chart illustrating the operation of the valve actuator according to Fig. 2,
- Fig. 4: shows schematically the flow of information during operation of the valve actuator, and
- Fig. 5: is a flow chart illustrating the method of operating the valve by the valve actuator.

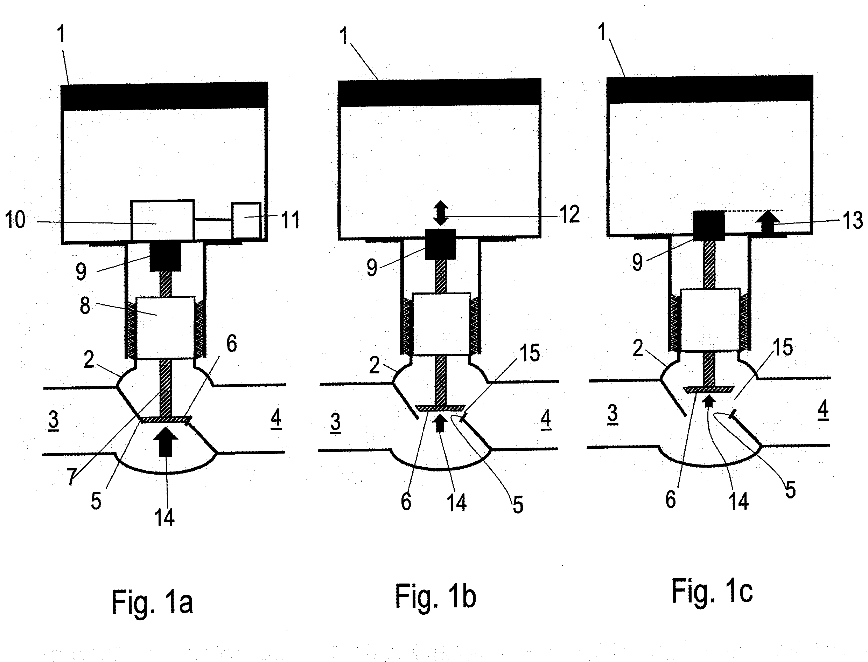

Fig. 1 schematically shows a valve actuator 1, such asan electric linear actuator, mounted to a valve 2. The valve 2 is a two-way valve having an inlet 3 and an outlet 4. A valve seat 5 is positioned between the inlet 3 and the outlet 4. A valve element 6 cooperates with the valve seat 5 in order to control a flow of a fluid through the valve 2.

The valve element 6 is connected to a valve stem 7 moving freely through a stuffing box 8.

The valve element 6 can be pretensioned, for example, in a direction away from the valve seat 5, i.e. in an opening position.

The valve actuator 1 comprises an actuation element 9 which is connected to the valve stem 7 or simply contacts the valve stem 7. The actuation element 9 is moved by a drive 10. The drive 10 is controlled by control means 11. Drive 10 and control means 11 are shown in Fig.1a only. They are omitted in the other Figures to keep the illustration simple.

The valve actuator 1 comprises a force sensor 12 (symbolized by a double arrow in Fig. 1b). The force sensor 12 senses a force 14, for example a tension and/or pressure force 14, acting on the actuation element 9. The force 14 acting on the actuation element 9 corresponds to a force 14 acting on the valve element 6.

Furthermore, the valve actuator 1 comprises a stroke sensor 13 symbolized by an arrow in Fig. 1c. The stroke sensor senses a displacement of the actuation element 9, i.e. the distance between the valve element 6 and the valve seat 5 or simply the position of the valve element 6.

Fig. 1a shows the valve 2 in closed position. A pressure difference between the inlet 3 and the outlet 4 creates a force 14 acting on the valve element 6. This force 14 is a maximum force. This force is sensed by the force sensor 12.

Fig. 1b shows the valve 2 in a slightly open condition, i.e. with a gap 15 between the valve seat 5 and the valve element 6. The force 14 acting on the valve element 2 is reduced. This reduced force 14 is sensed by the force sensor 12. At the same time, the stroke of the valve element 6, i.e. the distance between the valve element 6 and the valve seat 5 can be sensed by the stroke sensor 13.

Fig. 1c shows the valve 2 in a further opened condition, i.e. the gap 15 between the valve seat 5 and the valve element 6 has been further increased. The force 14 is further reduced. However, this is basically true only when the pressure difference between the inlet 3 and the outlet 4 does not change.

When, for a given displacement of the actuation element 9 the force 14 sensed by the force sensor 12 changes, the displacement of the actuation element 9 has to be changed as well to keep the flow rate of fluid through the valve 2 constant.

When, for example, for a given displacement of the actuation element 9 the force 14 increases this is an information that the pressure difference between the inlet 3 and the outlet 4 has increased. In this case the control means 11 has to actuate the drive 10 to decrease the displacement of the actuation element 9 in order to move the valve element 6 closer to the valve seat 5. When the force 14 decreases, this is an indication that the pressure difference between the inlet 3 and the outlet 4 has been decreased as well. Therefore, the valve element 6 has to be moved away from the valve seat 5 which can be done by increasing the displacement of the actuation element 9.

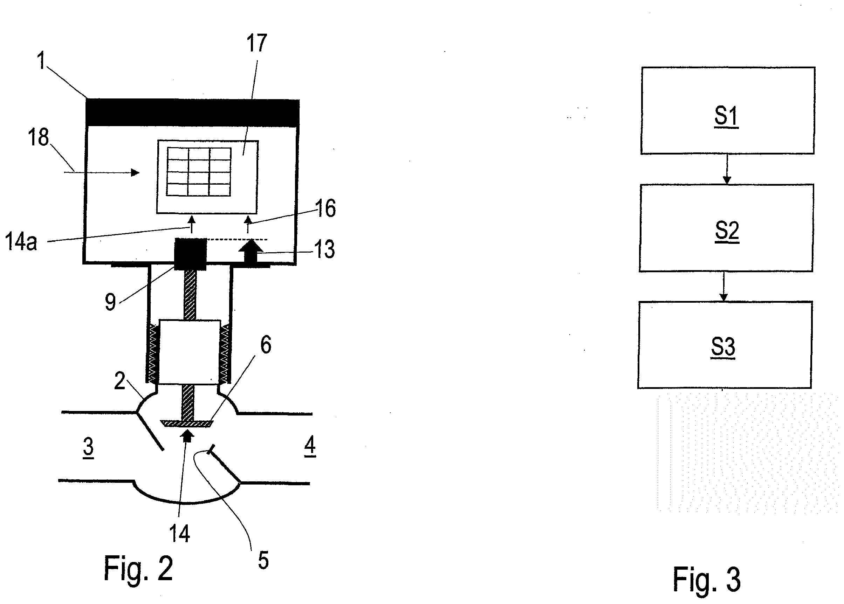

A more precise control can be achieved when force data 14a and displacement data 16 (both symbolized by arrows in Fig. 2) are stored in an information matrix 17. The information matrix 17 can be realized, for example, by a look-up table. Additionally, flow rate data 18 are stored in the information matrix 17 as well. The matrix of force data 14a, displacement data 16 and corresponding flow rate data 18 can be calculated or measured and accessed to set the position of the actuator.

In this embodiment, the information matrix 17 may be internal with the valve actuator 1 or external to the valve actuator 1.

Fig. 3 schematically shows a flow chart illustrating one possibility of the method of establishing the matrix.

Independent from the normal operation of the valve actuator 1 it may be necessary to use an additional flow rate sensor for establishing the matrix. As described above, the valve actuator 1 is connected to the valve 2. The valve actuator 1 is capable of measuring the force 14 acting from the fluid on the valve element 6, and of knowing an actual displacement of the valve element 6.

In a step S1 over a range of different given reference forces and/or alternatively over a range of different given reference displacements and/or alternatively over a range of different given reference flow rates, a couple of measurements of forces and/or displacements and/or flow rates are made.

In a step S2 the valve actuator 1 is run over the range of measured different reference forces 14 or alternatively the range of measured different reference displacements or alternatively the range of measured different reference flow rates, and the actual force 14 acting on the valve element 6 is measured by the force sensor 12 and/or the actual displacement of the valve element 6 is measured by the stroke sensor 13 and/or the actual flow rate is measured by the flow rate sensor.

In a step S3 all of the in step 2 measured force data 14a of forces 14, displacement data 16 of displacements and/or flow rates data 18 of flow rates are stored in the information matrix 17.

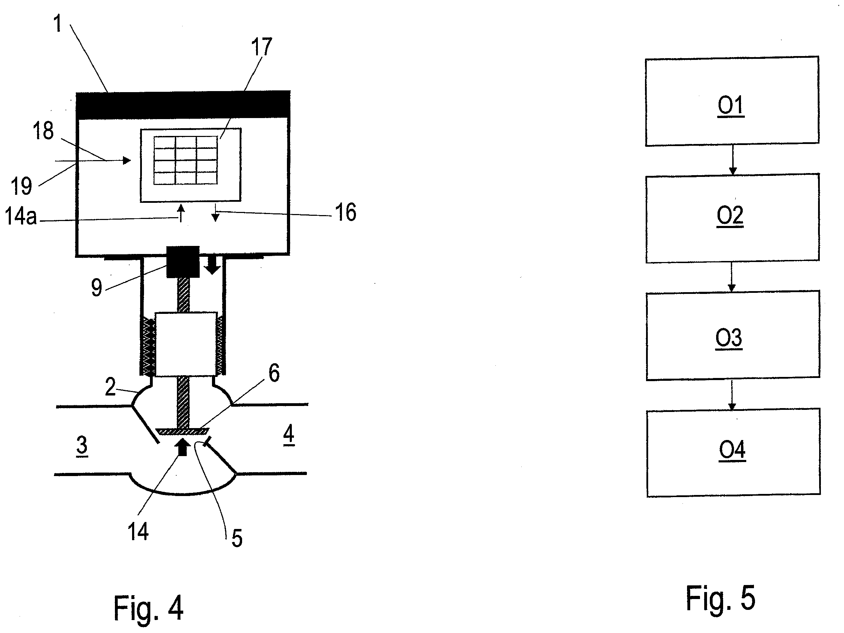

The operation of the valve actuator 1 is illustrated in connection with Fig. 4. Flow rate data 18 are inputted via a flow value input 19. Force data 14a from the force sensor 12 are obtained. When the valve actuator 1 measures a changing force data 14a, this is associated with a change in flow rates. The valve actuator 1 then knows the present force 14 and the present displacement of the valve element 6, which has not changed. Based on these data, the information matrix 17 can be used to determine a new displacement of the actuation element 9 and correspondingly of the valve element 6 that corresponds to the desired flow rate.

When the measured force changes, this would be related to a change of input conditions. Input conditions change due to changes in other parts of the flow circuit in which the valve 2 is built in. From the previous force data 14a and displacement data 16 the valve actuator 1 knows the flow rate. It now can obtain the new displacement data 16 for the correct flow rate (i.e. the constant flow rate) from the information matrix 17.

However, it is also possible to calculate the new displacement, when the relation between force 14, displacement and flow rate can be described by a function or a set of function.

Fig. 5 shows a flow chart schematically illustrating the method of operating the valve 2 by use of the information matrix 17.

In a step O1 the information matrix 17 has been established linking a force 14 acting on the valve element 6 and a flow rate to a displacement of the valve element 6 which corresponds to a displacement of the actuation element 9.

In a step O2 the actual force 14 acting on the valve element 6 is measured.

Step O3 deals with a situation in which the force 14 changes. The new force 14 and the present displacement data are used as input to the information matrix 17 to identify the new displacement that would give the desired flow rate. Instructions are given for a displacement of the actuation element.

In a step O4 based on the matrix data the valve actuator 1 adjusts the valve element 6 to a correct displacement by moving the actuation element 9 in the desired position.

The specific construction of the valve actuator 1 can be realized in a couple of ways.

The position or displacement of actuation element 9 can be determined by calculation internal in the valve actuator 1 or external to the valve actuator 1. It can be determined by a look-up table of flow rate and displacement at specific forces which are stored in the valve actuator 1 or external to the valve actuator 1.

The axial movement of the actuation element 9 can be created by a geared spindle, by a linear motor, by extension of metals, by a cartridge containing wax or any other heat expendable material.

The feedback of the position of the actuation element 9 can be achieved by a linear measurement or, if the displacement of the actuation element 9 is achieved by a rotary drive, by rotational measurement.

The force on the actuation element 9 can be measured or obtained by calculation in various ways, for example, strain gauge in various locations, motor current, displacement of a spring with a known force, etc.

The valve actuator 1 measures a value corresponding to the displacement of the valve element 6 from closed valve position. The valve actuator 1 measures a value corresponding to the force 14 on the actuation element 9 at all displacements. The force on the actuation element 9 at a specific displacement from closed position corresponds to a specific flow rate of the medium through a specific valve 2. The information matrix 17 of forces and displacements and corresponding medium flow rates for a specific valve 2 can be calculated or measured and accessed to set the position of the actuation element.

The valve actuator 1 receives a control signal at the flow value input 19 to set the flow rate of the medium through the valve. Depending on the force 14 determined to act on the valve element 6 and correspondingly on the actuation element 9 the actuation element 9 is moved to a specific position. If the force on the actuation element 9 changes, the actuator moves the actuation element 9 to a new position corresponding to the flow rate required.

## Claims

1. An valve arrangement comprising a valve actuator (1) and a two-way valve (2), the two-way valve having an inlet (3), an outlet (4), a valve seat (5) positioned between the inlet (3) and the outlet (4), a valve element (6) cooperating with the valve seat (5) in order to control a flow of a fluid through the valve (2), wherein the valve element (6) is construed to contact the valve seat (5), so that the flow through the valve is interrupted, a valve stem (7) connected to valve element (6) and moving freely through a stuffing box (8), the valve actuator (1) having an actuation element (9) connected to the valve stem (7) or simply contacting the valve stem (7), the actuation element (9) being able of moving between first and second positions, the first and second positions corresponding respectively to fully closed and fully open positions of the valve, a force sensor (12) sensing a tension and/or pressure force (14) acting on the actuation element (9), the force (14) acting on the actuation element (9) corresponding to the force (14) acting on the valve element (6), and a stroke sensor (13) sensing a displacement of the actuation element (9) from said first position, a drive (10) acting on the actuation element (9) and control means (11) controlling the drive (10), wherein the control means (11) are configured to adjust the displacement of the actuation element (9) based on the force (14) sensed by the force sensor (12), the displacement of the actuation element (9) from said first position sensed by the stroke sensor (13), and a given flow rate (18), wherein a relation between the flow rate (18), the force (14) and the displacement is stored in an information matrix (17), **characterised in that** the information matrix (17) is read out by the control means (11) to adjust the displacement of the actuation element (9), wherein if a force change is sensed by the force sensor (12), the new force and the present displacement data are used as input to the information matrix (17) to identify the new displacement of the actuation element (9) for the given flow rate, the actuation element (9) being moved to adjust the valve element (6) to a correct displacement with respect to the valve seat (5), wherein the information matrix (17) is realized by a look-up table, and wherein the control means (11) comprise calculation means additionally calculating a displacement of the actuation element (9) in reaction of a force (14) acting on the actuation element (9), wherein the calculation means is used in addition to the look-up table when an interpolation between values stored in the look-up table is necessary.

2. The valve arrangement according to claim 1, **characterized in that** the control means (11) comprise a flow rate input (19).

3. The valve arrangement according to any of the previous claims, **characterized in that** the valve actuator (1) is an electric linear actuator.

4. Method for operating the valve arrangement according any of claims 1 to 3, the method comprising the steps of sensing the force (14) acting on the actuation element (9) of the valve actuator (1),
sensing the displacement of the actuation element (9), and
adjusting the displacement of the actuation element (9) in reaction to the force (14), the displacement of the actuation element (9) from said first position and the given flow rate (18), wherein the relation between the flow rate (18), the force (14) and the displacement is stored in the information matrix (17).

## Patentansprüche

1. Ventilanordnung, umfassend einen Ventilaktuator (1) und ein Zwei-Wege-Ventil (2), wobei das Zwei-Wege-Ventil einen Einlass (3), einen Auslass (4), einen zwischen dem Einlass (3) und dem Auslass (4) positionierten Ventilsitz (5) und ein Ventilelement (6) aufweist, das mit dem Ventilsitz (5) zusammenwirkt, um einen Durchfluss eines Fluids durch das Ventil (2) zu steuern, wobei das Ventilelement (6) dafür ausgelegt ist, den Ventilsitz (5) zu berühren, so dass der Durchfluss durch das Ventil unterbrochen wird, wobei ein Ventilschaft (7) mit dem Ventilelement (6) verbunden ist und sich frei durch eine Stopfbuchse (8) bewegt, wobei der Ventilaktuator (1) ein Betätigungselement (9) aufweist, das mit dem Ventilschaft (7) verbunden ist oder den Ventilschaft (7) einfach berührt, wobei das Betätigungselement (9) in der Lage ist, sich zwischen einer ersten und einer zweiten Position zu bewegen, wobei die erste und die zweite Position einer vollständig geschlossenen bzw. vollständig geöffneten Position des Ventils entsprechen, einen Kraftsensor (12), der eine auf das Betätigungselement (9) wirkende Zug- und/oder Druckkraft (14) erfasst, wobei die auf das Betätigungselement (9) wirkende Kraft (14) der auf das Ventilelement (6) wirkenden Kraft (14) entspricht, und einen Hubsensor (13), der eine Verstellung des Betätigungselements (9) aus der ersten Position erfasst, einen Antrieb (10), der auf das Betätigungselement (9) wirkt, und Steuermittel (11), die den Antrieb (10) steuern, wobei die Steuermittel (11) so konfiguriert sind, dass sie die Verstellung des Betätigungselements (9) auf Grundlage der von dem Kraftsensor (12) erfassten Kraft (14), der von dem Hubsensor (13) erfassten Verstellung des Betätigungselements (9) aus der ersten Position und einer gegebenen Durchflussrate (18) anpassen, wobei eine Beziehung zwischen der Durchflussrate (18), der Kraft (14) und der Verstellung in einer Informationsmatrix (17) gespeichert ist, **dadurch gekennzeichnet, dass** die Informationsmatrix (17) durch die Steuermittel (11) ausgelesen wird, um die Verstellung des Betätigungselements (9) anzupassen, wobei, wenn eine Kraftänderung durch den Kraftsensor (12) erfasst wird, die neue Kraft und die aktuellen Verstelldaten als Eingabe in die Informationsmatrix (17) verwendet werden, um die neue Verstellung des Betätigungselements (9) für die gegebene Durchflussrate zu identifizieren, wobei das Betätigungselement (9) bewegt wird, um das Ventilelement (6) auf eine korrekte Verstellung in Bezug auf den Ventilsitz (5) anzupassen, wobei die Informationsmatrix (17) durch eine Nachschlagetabelle realisiert ist, und wobei die Steuermittel (11) Berechnungsmittel umfassen, die zusätzlich eine Verstellung des Betätigungselements (9) in Reaktion auf eine auf das Betätigungselement (9) wirkende Kraft (14) berechnen, wobei die Berechnungsmittel zusätzlich zur Nachschlagetabelle verwendet werden, wenn eine Interpolation zwischen in der Nachschlagetabelle gespeicherten Werten erforderlich ist.

2. Ventilanordnung nach Anspruch 1, **dadurch gekennzeichnet, dass** die Steuermittel (11) eine Durchflussrateneingabe (19) umfassen.

3. Ventilanordnung nach einem der vorhergehenden Ansprüche, **dadurch gekennzeichnet, dass** es sich bei dem Ventilaktuator (1) um einen elektrischen Linearaktuator handelt.

4. Verfahren zum Betreiben der Ventilanordnung nach einem der Ansprüche 1 bis 3, wobei das Verfahren die Schritte des Erfassens der auf das Betätigungselement (9) des Ventilaktuators (1) wirkenden Kraft (14),
des Erfassens der Verstellung des Betätigungselements (9) und
des Anpassens der Verstellung des Betätigungselements (9) in Reaktion auf die Kraft (14), die Verstellung des Betätigungselements (9) aus der ersten Position und die gegebene Durchflussrate (18) umfasst, wobei die Beziehung zwischen der Durchflussrate (18), der Kraft (14) und der Verstellung in der Informationsmatrix (17) gespeichert ist.

## Revendications

1. Agencement de soupape comprenant un actionneur de soupape (1) et une soupape à deux voies (2), la soupape à deux voies ayant une entrée (3), une sortie (4), un siège de soupape (5) positionné entre l'entrée (3) et la sortie (4), un élément de soupape (6) coopérant avec le siège de soupape (5) afin de commander un écoulement d'un fluide à travers la soupape (2), l'élément de soupape (6) étant conçu pour entrer en contact avec le siège de soupape (5), de sorte que l'écoulement à travers la soupape soit interrompu, une tige de soupape (7) raccordée à l'élément de soupape (6) et se mouvant librement à travers une boîte à garniture (8), l'actionneur de soupape (1) ayant un élément d'actionnement (9) raccordé à la tige de soupape (7) ou simplement en contact avec la tige de soupape (7), l'élément d'actionnement (9) étant apte à se mouvoir entre des première et deuxième positions, les première et deuxième positions correspondant respectivement à des positions complètement fermée et complètement ouverte de la soupape, un détecteur de force (12) détectant une force de tension et/ou de pression (14) agissant sur l'élément d'actionnement (9), la force (14) agissant sur l'élément d'actionnement (9) correspondant à la force (14) agissant sur l'élément de soupape (6), et un détecteur de course (13) détectant un déplacement de l'élément d'actionnement (9) depuis ladite première position, un entraînement (10) agissant sur l'élément d'actionnement (9) et un moyen de commande (11) commandant l'entraînement (10), le moyen de commande (11) étant configuré pour ajuster le déplacement de l'élément d'actionnement (9) sur la base de la force (14) détectée par le détecteur de force (12), le déplacement de l'élément d'actionnement (9) depuis ladite première position détecté par le détecteur de course (13), et un débit donné (18), dans lequel une relation entre le débit (18), la force (14) et le déplacement est stockée dans une matrice d'informations (17), **caractérisé en ce que** la matrice d'informations (17) est lue par le moyen de commande (11) pour ajuster le déplacement de l'élément d'actionnement (9), dans lequel si un changement de force est détecté par le détecteur de force (12), la nouvelle force et les présentes données de déplacement sont utilisées en tant qu'entrée dans la matrice d'informations (17) pour identifier le nouveau déplacement de l'élément d'actionnement (9) pour le débit donné, l'élément d'actionnement (9) étant mû pour ajuster l'élément de soupape (6) à un déplacement correct par rapport au siège de soupape (5), la matrice d'informations (17) étant réalisée par une table de conversion, et le moyen de commande (11) comprenant un moyen de calcul calculant de surcroît un déplacement de l'élément d'actionnement (9) en réaction à l'action d'une force (14) sur l'élément d'actionnement (9), le moyen de calcul étant utilisé en plus de la table de conversion lorsqu'une interpolation entre des valeurs stockées dans la table de conversion est nécessaire.

2. Agencement de soupape selon la revendication 1, **caractérisé en ce que** le moyen de commande (11) comprend une entrée de débit (19).

3. Agencement de soupape selon l'une quelconque des revendications précédentes, **caractérisé en ce que** l'actionneur de soupape (1) est un actionneur linéaire électrique.

4. Procédé de fonctionnement de l'agencement de soupape selon l'une quelconque des revendications 1 à 3, le procédé comprenant les étapes consistant à détecter la force (14) agissant sur l'élément d'actionnement (9) de l'actionneur de soupape (1),
détecter le déplacement de l'élément d'actionnement (9), et
ajuster le déplacement de l'élément d'actionnement (9) en réaction à la force (14), le déplacement de l'élément d'actionnement (9) depuis ladite première position et le débit donné (18), la relation entre le débit (18), la force (14) et le déplacement étant stockée dans la matrice d'informations (17).
